(19)

Europäisches
Patentamt
European
Patent Office
Office européen
des brevets

(11) **EP 1 433 139 B1**

(12) **EUROPEAN PATENT SPECIFICATION**

(45) Date of publication and mention
of the grant of the patent:
**09.05.2007 Bulletin 2007/19**

(51) Int Cl.:
***G06T 7/40*** (2006.01)

(21) Application number: **02727913.2**

(86) International application number:
**PCT/IB2002/001692**

(22) Date of filing: **15.05.2002**

(87) International publication number:
**WO 2002/092180 (21.11.2002 Gazette 2002/47)**

(54) **DEVICE AND METHOD FOR DIGITIZING AN OBJECT**

VORRICHTUNG UND VERFAHREN ZUR DIGITALISIERUNG EINES OBJEKTES

DISPOSITIF ET PROCEDE PERMETTANT DE NUMERISER UN OBJECT

(84) Designated Contracting States:
**AT BE CH CY DE DK ES FI FR GB GR IE IT LI LU
MC NL PT SE TR**

(30) Priority: **17.05.2001 EP 01201838**
**25.09.2001 EP 01203647**

(43) Date of publication of application:
**30.06.2004 Bulletin 2004/27**

(73) Proprietor: **Koninklijke Philips Electronics N.V.
5621 BA Eindhoven (NL)**

(72) Inventor: **VAN DER WEIJ, Hendricus, H., M.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**US-A- 6 005 959**

- **ZONGKER D E ET AL: "ENVIRONMENT MATTING
AND COMPOSITING" COMPUTER GRAPHICS.
SIGGRAPH 99 CONFERENCE PROCEEDINGS.
LOS ANGELES, CA, AUG. 8-13, 1999, COMPUTER
GRAPHICS PROCEEDINGS. SIGGRAPH, NEW
YORK, NY: ACM, US, 8 August 1999 (1999-08-08),
pages 205-214, XP001032895 ISBN:
0-201-48560-5**
- **DATABASE WPI Derwent Publications Ltd.,
London, GB; AN 1996-028866 XP002243258 "Flat
transparent object light transparency testing
method" & RU 2 035 721 A (SERGEEV A.V.,
SHLYAKHTENKO P.G., SURIKOV O.M.)**

**Description**

FIELD OF THE INVENTION

The invention relates to a method of digitizing an object. The invention further relates to a device for digitizing an object. The invention further relates to a computer program product.

BACKGROUND OF THE INVENTION

With the advance of modern computer technology, it has become possible to digitize all kind of objects into a digital computer representation. For example, a picture can be digitized by means of a scanner, and a physical object can be directly photographed with a digital photo camera. More advanced forms of digitizing objects also include, apart from visual aspects, properties such as transparency, internal structure, texture etc. From medical applications it is known to digitize multiple slices of the human body to carefully study a possible disease. Instead of taking one photograph from one particular direction, objects can be photographed from a plurality of directions, and represented as a three-dimensional object in a computer.

Once digitized, the digital representation of the object can be displayed on a computer screen, or processed in any other manner. If a full three-dimensional representation is available, a complete virtual world can be created which can be navigated by a user. Such virtual environments are widely applied in, for example, computer games.

In the United States Patent US 6,005,959 a method is described for characterization of the size of a target object. The method comprises taking a picture of the object with a light switched on, and taking another picture of the object with the light switched off. Pixels which appear brighter when the light is switched on are supposed to be part of the object.

There are methods to determine the shape and color of a physical object by comparing a snapshot with the object in an environment to another snapshot of the same environment without the object. By comparing differences, a reasonable reconstruction of the object can be made. However, the accuracy greatly depends on the background image and object shape. For example, if their colors match, separation will be difficult or even impossible.

OBJECT AND SUMMARY OF THE INVENTION

It is an object of the invention to provide an improved method and device of the type defined in the opening paragraph. To this end, the method according to the invention comprises a step of providing a first background, a step of taking a first snapshot of the object on the first background, a step of replacing the first background with a second background, a step of taking a second snapshot of the object on the second background, and a step of determining a difference between corresponding pixels of the first and second snapshots, and identifying, in the first and second snapshots, corresponding pixels of the object having a difference that is smaller than a difference of corresponding pixels of the first and second backgrounds. By taking successive snapshots of the object on different backgrounds, the object becomes a constant part of both snapshots. By comparing pixel values of the two backgrounds at corresponding positions, the differences between all corresponding pixels can be determined, resulting in a matrix of differences of background. Subsequently, the two snapshots are compared, and a pair of corresponding pixels having a mutual difference which is smaller than the difference of background at that particular position apparently belongs to the foreground object. In an ideal situation the mutual difference is expected to be zero, since the object covers the background in both snapshots and it is only the background that changes. However, the method according to the invention can also be applied to (semi-) transparent objects, as will be described hereinafter.

In a preferred embodiment the first and second backgrounds are uniformly colored, with a high mutual difference between the two colors, for example black and white, respectively. In this way it is achieved that said difference of background is relatively high and constant over the whole background. As a result the determination of the pixels belonging to the object is simplified and rendered more reliable.

Preferably, the background is provided by means of a display screen. In this way it is achieved that the whole process can conveniently take place under control of a computer, without costly and unreliable mechanical parts for changing the background.

In an advanced embodiment the method according to the invention further comprises a step of determining a transparency of the object, by determining a proportion of the difference of foreground and background of a pair of corresponding pixels of the first and second snapshots, said proportion being representative of said transparency. When the object comprises transparent parts, there will be a difference between pixels of the object in the two snapshots, depending on the difference between corresponding pixels of the two backgrounds and the transparency of the object. If the transparency of part of the object is high, the difference between corresponding pixels of that part of the object in the two snapshots will approximate the difference of background at the corresponding location. If the transparency of part of the object is low or the object is completely opaque at that part, the difference between corresponding pixels of that part of the object in the two snapshots will be approximate zero.

In an embodiment the method according to the invention comprises a step of mapping a transparency value below a predetermined threshold to a zero percent value and/or a step of mapping a transparency value above a predetermined further threshold to a hundred percent value. When capturing an image, there is always some noise. To cope with this, a threshold is used for the minimum level of transparency and/or the maximum level of opacity. For example, when the transparency threshold is set to 90% every pixel that is measured as more than 90% transparent is considered to be completely transparent and therefore part of the background.

In an embodiment the method according to the invention further comprises a step of displaying a further image on the display screen to enable a user to position the object in the further image, a step of digitizing the object and a step of including the resultant image at the corresponding position in the further image. In this way a very attractive method of including a digitized image of an object in a further image is obtained. Preferably, the display screen is mounted horizontally. When the further image is displayed on the horizontal display screen, a user need only put the object on the displayed further image at the desired location and in the desired orientation. Subsequently, the method according to the invention is applied to digitize the object, i.e. the background is temporarily changed to the first and second backgrounds respectively and snapshots are taken to isolate the pixels belonging to the object. After that, the pixels belonging to the object are included in the further image at the position where it was located before the snapshots were taken. Hence, after removing the object, the user sees the image of the object 'stay behind' in the further image. The inclusion might be achieved by simply overwriting the pixels of the further image resulting in a plain bitmap. Alternatively, the digitized object is placed in a separate layer of the further image, allowing the digitized object to be manipulated, e.g. moved across the further image etc. Such a 'camera table' device constitutes a very attractive device for creating images or virtual worlds comprising photorealistic objects. An example of application is the use of the device as a play tool in a playing environment for children, allowing the children to create their own video story including digital representations of all kinds of physical objects from their real-world environment.

BRIEF DESCRIPTION OF THE DRAWINGS

These and other aspects of the invention are apparent from and will be elucidated, by way of a non-limitative example, with reference to the embodiment(s) described hereinafter. In the drawings,

Fig. 1 shows a schematic overview of a device embodying the invention,
Fig. 2 shows a first and a second snapshot of an opaque object on a black and white background,
Fig. 3 shows a first and a second snapshot of a partially transparent object,
Fig. 4 shows how light is emitted by each pixel that belongs to an object,
Fig. 5 shows a non-uniform light distribution on an LCD display.

DESCRIPTION OF EMBODIMENTS

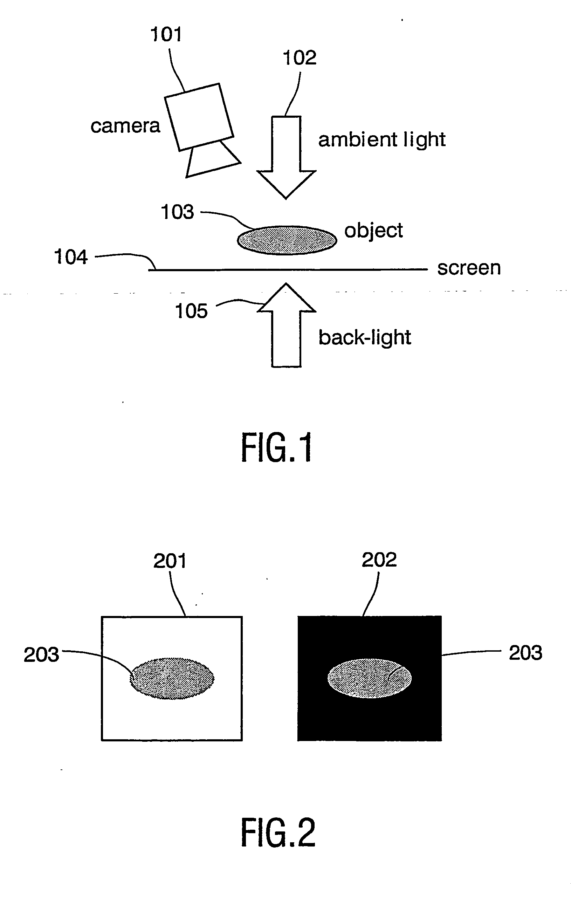

Fig. 1 shows a schematic overview of a device embodying the invention, conveniently called a camera table. It allows a user to locate an object above a horizontally mounted screen, e.g. by putting the object simply on the surface of the screen. However, the invention may equally well be applied to any other arrangements, e.g. the screen having different orientation and the object being held in position in any conceivable manner, e.g. by supports, thin wires, magnetic fields. The device is capable of successively displaying a black and white background and determining which pixels of the snapshots correspond to parts of the object.

The general principle of the capturing method relies on controlling the background / back-lighting of the physical object to be captured.

A camera 101 is used to take multiple snapshots, while the background is changed. Each snapshot captures the same object 103, but on a different background. This enables one to determine object shape and colors, and what parts of the object are transparent, and determine its transparency. Ambient light 102 is falling on the object 103 enabling it to be photographed by the camera 101. A display screen 104 is provided to generate successive backgrounds for the snapshots. The display screen 104 may be a CRT or a backlight LCD, thus causing backlight falling on the rear side of the object 103, and falling through any transparent parts of the object 103. However, the invention applies equally well with a non-backlight display screen or even with separate black and white boards as successive backgrounds.

From a single snapshot taken on a static background, it is impossible to determine exactly which parts of the snapshot belong to the object, and which parts belong to its environment. To overcome this problem, multiple snapshots are made while the background is controlled. This makes determining of the object outlines and colors feasible. The snapshots are compared and the pixels in the snapshots that are identical correspond to an opaque part of the object, while those that are different must be part of the (controlled) background, or part of a (semi)transparent part of the object.

Fig. 2 illustrates the mechanism by a simple example, where two snapshots are taken of an opaque object 203: one on a white background 201, and one on a black background 202. The snapshots are then compared, and those pixels that are black in the first snapshot and white in the second snapshot are part of the background. The other pixels are part of the opaque object 203 itself.

In practice, and also in the system built, physical properties causing "noise" must be taken into account:

- Fluctuations in ambient lighting, for example next to a changing light source,
- Inaccuracies of the camera: physical or optical instability, causing pixels to shift between snapshots

Some methods for compensating these factors are explained hereinafter.

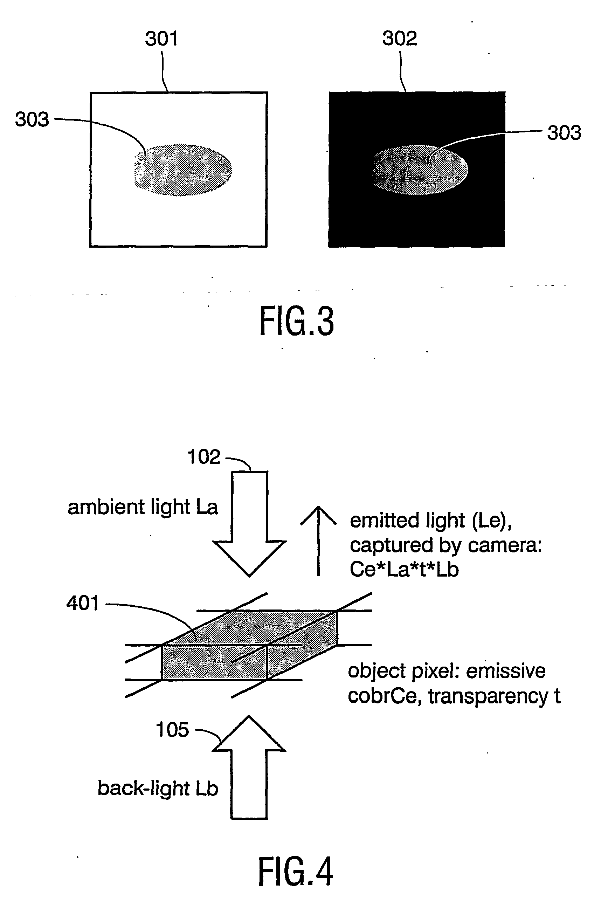

The method of capturing objects described here allows not only the capturing of the shape and color of an object, but also its transparency properties. The key to this is, that by changing the back-light, pixels that belong to the transparent parts of the object will slightly differ between snapshots. Fig. 3 shows the frames captured for a gray object 303 of which the left side is completely transparent and the right side is completely opaque. The pixels on the right remain unchanged, while the pixels on the left are affected by the background color 301 and 302, respectively.

When the object comprises transparent parts, there will be a difference between pixels of the object in the two snapshots, depending on the difference between corresponding pixels of the two backgrounds and the transparency of the object. If the transparency of a part of the object is high, the difference between corresponding pixels of that part of the object in the two snapshots will approximate the difference of background at the corresponding location. If the transparency of a part of the object is small or the object is completely opaque at that part, the difference between corresponding pixels of that part of the object in the two snapshots will approximate zero. In a preferred embodiment the first background is plain white and the second background is plain black, or vice versa. In this way a maximum contrast is obtained between background pixels, which can be defined as a 100% difference. The difference of corresponding pixels belonging to the object will then be between 0%, i.e. pixels that belong to opaque parts of the object, and 100%, i.e. pixels that belong to the background. The transparency of each pixel roughly corresponds to the difference measured between the captured frames.

Fig. 4 shows how the light is emitted by each pixel that belongs to the object.

When taking multiple snapshots with varying back-light (Lb), different values will be captured for the emitted light of each pixel 401. From these values, the transparency can be determined. For example, when taking two snapshots, one on a black background and one on a white background, the following equations are obtained:

Black background:

$$Le_b = Ce * La \qquad (Lb = 0)$$

White background:

$$Lew = Ce * La + t \qquad (Lb = 1)$$

From this can be determined that:

$$Ce = Le_b / La$$

$$t = Le_w / (Ce * La)$$

When normalizing La to 1, we obtain:

the color of the object $Ce = Le_b$
the transparency of the object $Le_w / Le_b$

Because of physical factors, the difference between pixels will hardly ever be 0% or 100%. There will always be some noise, which gives a few percent deviation. When determining transparency, this may cause parts of the background to be determined as transparent parts of the object Likewise, completely opaque parts of the object could be considered slightly transparent. To cope with these inaccuracies, a threshold is used for the minimum level of transparency and the maximum level of opacity. For example, when the transparency threshold is set to 90%, every pixel that is measured as more than 90% transparent is considered to be completely transparent and therefore part of the background. If the opacity threshold is set to 90%, every pixel that is measured as more than 90% opaque is considered to be completely opaque.

Most cameras are very sensitive to the total amount of light they are exposed to, even if automatic gain control is not enabled. In particular, when taking a snapshot of an object on for example a black and a white background, the opaque parts of the object will generally not have the same values. This is caused by the effect of the total amount of light the camera is exposed to. A simple solution is, to take the object pixels from the capture on the black background and ignore the values on the white background. This method is then combined with the transparency threshold as discussed hereinbefore to determine which parts belong to the object.

Camera optics and physical properties are not ideal. Depending on camera quality and stability of the general setup, the noise can be minimized. Some factors that can be optimized are:

- Camera quality: high resolution reduces the noise
- Stability of lighting: the more controlled the environment, the better the results
- Intensity of lighting: more light reduces the noise

In addition to creating good environmental conditions, compensations can be added to the software:

- Taking more snapshots: if time so allows, more snapshots can be taken, and the results can be averaged. This filters out fluctuations in lighting and other noise.
- Software filtering of the snapshots reduces noise. This will be at the cost of image resolution, so it works best with a high-resolution camera.
- Software filtering of the image can also be used to determine small isolated "islands" of object or background. These are very likely to be glitches, and they can be removed. A minimum size of object / background islands can be set to cancel out this type of noise.

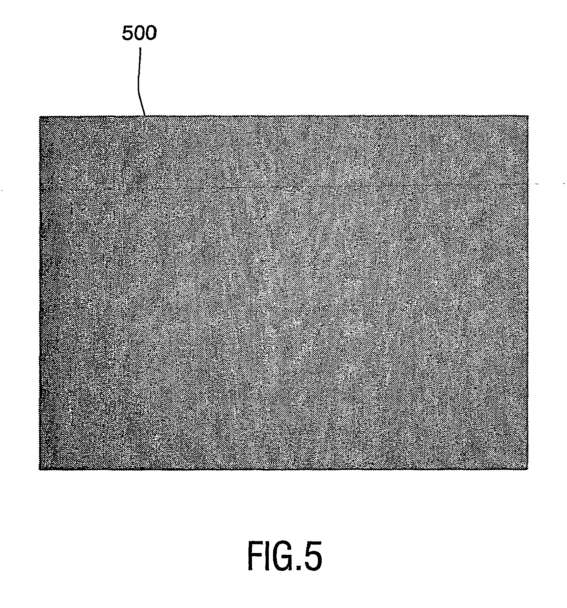

Even though a back-light seems to be uniform for the human eye, there is nearly always a non-uniform distribution of the light. An example 500 of this is shown in Fig. 5. The same holds for ambient light. This effect can be compensated in software by "calibrating" the system before it is used in a particular setup. Calibration includes measuring the lighting conditions (back-light and ambient light) without an object. The results of this are then included when the snapshots are taken.

In case the lighting is not uniform over time, this can be compensated by:

- Taking multiple snapshots (see above)
- Automatic gain control (in software), where the total amount of light is measured and used to scale the intensity of individual pixels.

Instead of using an LCD screen, a (much cheaper) lamp can be used that lights a screen that is used as the background. By switching the lamp on and off, while taking the snapshots, the object can be captured. This setup allows us to capture also much larger objects in a kind of "photo studio" setup.

In summary, the invention relates to a method of digitizing physical objects. With this method, it is possible to capture not only the shape (and color) of an object, but also its transparency properties. This is done by taking multiple snapshots while controlling the back-lighting of the object. A specific embodiment is based on a camera for capturing the images, and an LCD screen for controlling the back-lighting.

Throughout the Figures, like reference numerals indicate like or corresponding features. Some of the features indicated in the drawings are typically implemented in software, and as such represent software entities, such as software modules or objects.

Although the invention has been described with reference to particular illustrative embodiments, variants and modifications are possible within the scope of the inventive concept. Thus, for example, instead of using an LCD screen, a (much cheaper) lamp can be used that lights a screen that is used as the background. By switching the lamp on and off, while taking the snapshots, the object can be captured. This setup allows one to capture also much larger objects in a kind of "photo studio" setup.

The use of the verb 'to comprise' and its conjugations does not exclude the presence of elements or steps other than those defined in a claim. In the claims, any reference signs placed between parentheses shall not be construed as limiting the claim. The invention can be implemented by means of hardware comprising several distinct elements, and by means of a suitably programmed computer. In the device claim enumerating several means, several of these means can be embodied by one and the same item of hardware.

A 'computer program' is to be understood to mean any software product stored on a computer-readable medium, such as a floppy-disk, downloadable via a network, such as the Internet, or marketable in any other manner.

## Claims

1. A method of digitizing an object (203) comprising:

   - a step of providing a first background (201), and
   - a step of taking a first snapshot of the object (203) on the first background (201), **characterized in that** the method further comprises
   - a step of replacing the first background (201) with a second background (202),
   - a step of taking a second snapshot of the object (203) on the second background (202), and
   - a step of determining a difference between corresponding pixels of the first and second snapshots, and identifying, in the first and second snapshots, corresponding pixels of the object having a difference that is smaller than a difference of corresponding pixels of the first and second backgrounds.

2. A method as defined in claim 1, the first and second background being uniformly colored.

3. A method as claimed in claim 1 or 2, substantially every pixel of the first background (201) having a relatively large difference with respect to a corresponding pixel of the second background (202).

4. A method as claimed in any one of claims 1 to 3, said first and second backgrounds being provided by a display screen.

5. A method as claimed in any one of claims 1 to 4, further comprising a step of determining a transparency of the object (203), by determining a proportion of the foreground difference and a difference of background of a pair of corresponding pixels of the first and second snapshots, said proportion being representative of said transparency.

**6.** A method as claimed in claim 5, mapping a transparency value below a predetermined threshold to a zero percent value.

**7.** A method as claimed in claim 5 or 6, mapping a transparency value above a predetermined further threshold to a hundred percent value.

**8.** A method as claimed in any one of claims 4 to 7, further comprising a step of displaying a further image on the display screen to enable a user to position the object (203) in the further image, a step of digitizing the object (203) and a step of including the resulting image at the corresponding position in the further image.

**9.** A method of digitizing an object (203) as claimed in claim 1, further comprising a step of determining a difference of background between the corresponding pixels of the first and second backgrounds by measuring the lighting conditions without the object (203).

**10.** A device for digitizing an object (203), comprising a controller and a camera (101) adapted to take a snapshot of the object (203) under the control of the controller, and background means (104, 105) for providing a first background (201) behind the object (203) under the control of the controller, the controller being adapted to take a first snapshot of the object (203) on the first background (201), **characterized in that**

- the controller is further adapted to replace the first background (201) with a second background (202) and to take a second snapshot of the object (203) on the second background (202), and to determine a difference between corresponding pixels of the first and second snapshots, and identify, in the first and second snapshots, corresponding pixels of the object having a difference that is smaller than a difference of corresponding pixels of the first and second backgrounds.

**11.** A device as claimed in claim 10, the first and second backgrounds being uniformly colored.

**12.** A device as claimed in any one of claims 10 or 11, substantially every pixel of the first background (201) having a relatively large difference with respect to a corresponding pixel of the second backgrounds.

**13.** A device as claimed in any one of claims 10 to 12, comprising a display screen (104) for providing said first and second backgrounds.

**14.** A device as claimed in any one of claims 10 to 13, the controller being further adapted to determine a transparency of the object (203) by determining a proportion of a difference of foreground and background of a pair of the corresponding pixels of the first and second snapshots, said proportion being representative of said transparency.

**15.** A device as claimed in claim 14, the controller being adapted to map a transparency value below a predetermined threshold to a zero percent value.

**16.** A device as claimed in claim 14 or 15, the controller being adapted to map a transparency value above a predetermined further threshold to a hundred percent value.

**17.** A device as claimed in any one of claims 13 to 16, the controller being adapted to project an image of the object (203) in a further image, by displaying said further image on the display screen so as to enable a user to position the object (203) in the further image, and subsequently digitize the object (203) and include the resulting image at the corresponding position in the further image.

**18.** A computer program product enabling a programmable device when executing said computer program product to function as a device as claimed in any one of the claims 10 to 17.

**Patentansprüche**

**1.** Verfahren zum Digitalisieren eines Objektes (203), wobei dieses Verfahren die nachfolgenden Verfahrensschritte umfasst:

- das Schaffen eines ersten Hintergrundes (201), und
- das Nehmen eines ersten Schnappschusses des Objektes (203) vor dem ersten Hintergrund (201),

**dadurch gekennzeichnet, dass** das Verfahren weiterhin die nachfolgenden Verfahrensschritte umfasst:

- das Ersetzen des ersten Hintergrundes (201) durch einen zweiten Hintergrund (202),
- das Nehmen eines zweiten Schnappschusses des Objektes (203) vor dem zweiten Hintergrund (202), und
- das Ermitteln einer Differenz zwischen entsprechenden Pixeln des ersten und des zweiten Schnappschusses, und das Identifizieren entsprechender Pixel des Objektes in dem ersten und in dem zweiten Schnappschuss, die eine Differenz haben, die kleiner ist als eine Differenz entsprechender Pixeln des ersten und des zweiten Hintergrundes.

2. Verfahren nach Anspruch 1, wobei der erste und der zweite Hintergrund einheitlich gefärbt ist.

3. Verfahren nach Anspruch 1 oder 2, wobei im Wesentlichen jedes Pixel des ersten Hintergrundes (201) eine relativ große Differenz gegenüber einem entsprechenden Pixel des zweiten Hintergrundes (202) hat.

4. Verfahren nach einem der Ansprüche 1 bis 3, wobei der genannte erste und zweite Hintergrund von einem Wiedergabeschirm geliefert werden.

5. Verfahren nach einem der Ansprüche 1 bis 4, wobei das Verfahren weiterhin einen Verfahrensschritt der Ermittlung der Transparenz des Objektes (203) aufweist, durch Ermittlung eines Verhältnisses der Vordergrunddifferenz und einer Differenz des Hintergrundes eines Paares entsprechender Pixel des ersten und zweiten Schnappschusses, wobei das genannte Verhältnis für die genannte Transparenz repräsentativ ist.

6. Verfahren nach Anspruch 5, wobei ein Transparenzwert unterhalb einer vorbestimmten Schwelle auf einem Null Prozentwert abgebildet wird.

7. Verfahren nach Anspruch 5 oder 6, wobei ein Transparenzwert über einer vorbestimmten weiteren Schwelle auf einem Hundert Prozentwert abgebildet wird.

8. Verfahren nach einem der Ansprüche 4 bis 7, das weiterhin die nachfolgenden Verfahrensschritte umfasst: das Wiedergeben eines weiteren Bildes an dem Wiedergabeschirm, damit einem Benutzer die Möglichkeit geboten wird, das Objekt (203) in dem weiteren Bild zu positionieren, das Digitalisieren des Objektes (203) und das Einschließen des resultierenden Bildes an der entsprechenden Stelle in das weitere Bild.

9. Verfahren zum Digitalisieren eines Objektes (203) nach Anspruch 1, wobei das Verfahren weiterhin das Ermitteln einer Differenz des Hintergrundes zwischen den entsprechenden Pixeln des ersten und des zweiten Hintergrundes umfasst, und zwar durch Messung der Beleuchtungsumstände ohne das Objekt (203).

10. Anordnung zum Digitalisieren eines Objektes (203), wobei diese Anordnung einen Controller und eine Kamera (101) aufweist, vorgesehen zum nehmen eines Schnappschusses des Objektes (203) unter Ansteuerung des Controllers, und Hintergrundmittel (104, 105) zum Liefern eines ersten Hintergrundes (201) hinter dem Objekt (203) unter Ansteuerung des Controllers, wobei der Controller dazu vorgesehen ist, einen ersten Schnappschuss des Objektes (203) vor dem ersten Hintergrund (201) zu nehmen, **dadurch gekennzeichnet, dass**

- der Controller weiterhin dazu vorgesehen ist, den ersten Hintergrund (201) durch einen zweiten Hintergrund (202) zu ersetzen und einen zweiten Schnappschuss des Objektes (203) vor dem zweiten Hintergrund (202) zu nehmen, und eine Differenz zwischen entsprechenden Pixeln des ersten und des zweiten Schnappschusses zu nehmen, und entsprechende Pixel des Objektes mit einer Differenz, die kleiner ist als eine Differenz entsprechender Pixel des ersten und des zweiten Hintergrundes in dem ersten und dem zweiten Schnappschuss zu identifizieren.

11. Anordnung nach Anspruch 10, wobei der erste und der zweite Hintergrund einheitlich gefärbt sind.

12. Anordnung nach Anspruch 10 oder 11, wobei im Wesentlichen jedes Pixel des ersten Hintergrundes (201) eine relativ große Differenz gegenüber einem entsprechenden Pixel des zweiten Hintergrundes hat.

13. Anordnung nach einem der Ansprüche 10 bis 12, mit einem Wiedergabeschirm (104) zum Liefern des genannten ersten und zweiten Hintergrundes.

14. Anordnung nach einem der Ansprüche 10 bis 13, wobei der Controller weiterhin dazu vorgesehen ist, eine Transparenz des Objektes (203) zu ermitteln, und zwar durch Ermittlung eines Verhältnisses einer Differenz des Vordergrundes und des Hintergrundes eines Paares entsprechender Pixel des ersten und des zweiten Schnappschusses, wobei das genannte Verhältnis für die genannte Transparenz repräsentativ ist.

15. Anordnung nach Anspruch 14, wobei der Controller dazu vorgesehen ist, einen Transparenzwert unterhalb einer vorbestimmten Schwelle auf einem Null Prozent Wert abzubilden.

16. Anordnung nach Anspruch 14 oder 15, wobei der Controller dazu vorgesehen ist, einen Transparenzwert über einer vorbestimmten weiteren Schwelle auf einem Hundert Prozent Wert abzubilden.

17. Anordnung nach einem der Ansprüche 13 bis 16, wobei der Controller dazu vorgesehen ist, ein Bild des Objektes (203) in ein weiteres Bild zu projizieren, und zwar durch Wiedergabe des genannten weiteren Bildes an dem Wiedergabeschirm, damit ein Benutzer in den Stand gesetzt wird, das Objekt (203) in einem weiteren Bild zu positionieren, und danach das Objekt (203) zu digitalisieren und das resultierende Bild an der entsprechenden Stelle in das weitere Bild einzuschließen.

18. Computerprogrammprodukt, das es ermöglicht, dass eine programmierbare Anordnung, wenn es das genannte Computerprogrammprodukt durchführt, als Anordnung nach einem der Ansprüche 10 bis 17 zu funktionieren.

**Revendications**

1. Procédé de numérisation d'un objet (203) comportant:

    - une étape permettant de fournir un premier arrière-plan (201), et
    - une étape de prise d'un premier instantané de l'objet (203) sur le premier arrière-plan (201), **caractérisé en ce que** le procédé comporte en outre
    - une étape de replacement du premier arrière-plan (201) par un deuxième arrière-plan (202),
    - une étape de prise d'un deuxième instantané de l'objet (203) sur le deuxième arrière plan (202), et
    - une étape de détermination d'une différence entre les pixels correspondants du premier et du deuxième instantanés, et d'identification, dans le premier et le deuxième instantanés, des pixels correspondants de l'objet ayant une différence qui est plus petite qu'une différence des pixels correspondants des premier et deuxième arrière-plans.

2. Procédé selon la revendication 1, le premier et le deuxième arrière-plans étant colorés uniformément.

3. Procédé selon la revendication 1 ou 2, pratiquement chaque pixel du premier arrière-plan (201) ayant une différence relativement grande par rapport à un pixel correspondant du deuxième arrière-plan (202).

4. Procédé selon l'une quelconque des revendications 1 à 3, lesdits premier et deuxième arrière-plans étant fournis par un écran d'affichage.

5. Procédé selon l'une quelconque des revendications 1 à 4, comportant en outre une étape de détermination d'une transparence de l'objet (203), en déterminant une proportion de la différence d'avant-plan et d'une différence d'arrière-plan d'une paire de pixels correspondants des premier et deuxième instantanés, ladite proportion étant représentative de ladite transparence.

6. Procédé selon la revendication 5, faisant correspondre une valeur de transparence au-dessous d'un seuil prédéterminé avec une valeur de zéro pour cent.

7. Procédé selon la revendication 5 ou 6, faisant correspondre une valeur de transparence au-dessus d'un seuil supplémentaire prédéterminé avec une valeur de cent pour cent.

8. Procédé selon l'une quelconque des revendications 4 à 7, comportant en outre une étape d'affichage d'une image supplémentaire sur l'écran d'affichage pour permettre à un utilisateur de positionner l'objet (203) dans l'image supplémentaire, une étape de numérisation de l'objet (203) et une étape d'inclusion de l'image résultante à la position correspondante dans l'image supplémentaire.

9. Procédé de numérisation d'un objet (203) selon la revendication 1, comportant en outre une étape de détermination d'une différence d'arrière-plan entre les pixels correspondants des premier et deuxième arrière-plans en mesurant les conditions de luminosité sans l'objet (203).

10. Dispositif de numérisation d'un objet (203), comportant un contrôleur et un appareil photo (101) adapté pour prendre un instantané de l'objet (203) sous la commande du contrôleur, et un moyen d'arrière-plan (104, 105) permettant de fournir un premier arrière-plan (201) derrière l'objet (203) sous la commande du contrôleur, le contrôleur étant adapté pour prendre un premier instantané de l'objet (203) sur le premier arrière-plan (201), **caractérisé en ce que**

    - le contrôleur est en outre adapté pour remplacer le premier arrière-plan (201) par un deuxième arrière-plan (202) et pour prendre un deuxième instantané de l'objet (203) sur le deuxième arrière-plan (202), et pour déterminer une différence entre les pixels correspondants des premier et deuxième instantanés, et pour identifier, dans les premier et deuxième arrière-plans, les pixels correspondants de l'objet ayant une différence qui est plus petite qu'une différence des pixels correspondants des premier et deuxième arrière-plans.

11. Dispositif selon la revendication 10, les premier et deuxième arrière-plans étant colorés uniformément.

12. Dispositif selon l'une quelconque des revendications 10 ou 11, pratiquement chaque pixel du premier arrière-plan (201) ayant une différence relativement importante par rapport à un pixel correspondant du deuxième arrière-plan.

**13.** Dispositif selon l'une quelconque des revendications 10 à 12, comportant un écran d'affichage (104) permettant de fournir lesdits premier et deuxième arrière-plans.

**14.** Dispositif selon l'une quelconque des revendications 10 à 13, le contrôleur étant en outre adapté pour déterminer une transparence de l'objet (203) en déterminant une proportion d'une différence d'avant-plan et d'arrière-plan d'une paire des pixels correspondants des premier et deuxième instantanés, ladite proportion étant représentative de ladite transparence.

**15.** Dispositif selon la revendication 14, le contrôleur étant adapté pour faire correspondre une valeur de transparence au-dessous d'un seuil prédéterminé avec une valeur de zéro pour cent.

**16.** Dispositif selon la revendication 14 ou 15, le contrôleur étant adapté pour faire correspondre une valeur de transparence au-dessus d'un seuil supplémentaire prédéterminé avec une valeur de cent pour cent.

**17.** Dispositif selon l'une quelconque des revendications 13 à 16, le contrôleur étant adapté pour projeter une image de l'objet (203) dans une image supplémentaire, en affichant ladite image sur l'écran d'affichage afin de permettre à un utilisateur de positionner l'objet (203) dans l'image supplémentaire, et par la suite de numériser l'objet (203) et d'inclure l'image résultante à la position correspondante dans l'image supplémentaire.

**18.** Produit de programme informatique permettant à un dispositif programmable de fonctionner comme un dispositif selon l'une quelconque des revendications 10 à 17 quand il exécute ledit programme informatique.

**FIG.1**

**FIG.2**

301 302

303 303

# FIG.3

102

ambient light La

emitted light (Le),
captured by camera:
Ce*La*t*Lb

401

object pixel: emissive
cobrCe, transparency t

105

back-light Lb

# FIG.4

500

FIG.5